# EUROPEAN PATENT APPLICATION

(11) **EP 4 617 631 A1**
(43) Date of publication of application: **17.09.2025**
(21) Application number: 23922850.5
(22) Date of filing: 12.10.2023
(51) Int. Cl.: G01J 3/24, G01J 3/36, G01N 21/27

(54) **SPECTROMETER, SPECTROSCOPIC MEASUREMENT SYSTEM, AND SPECTROSCOPIC DETECTION METHOD**

(30) Priority: 15.02.2023 JP 2023021851
(71) Applicant: Hamamatsu Photonics K.K., Hamamatsu-shi, Shizuoka 435-8558 (JP)
(72) Inventor: ARATA, Ikuo, Hamamatsu-shi, Shizuoka 435-8558 (JP); TSUCHIYA, Kunihiko, Hamamatsu-shi, Shizuoka 435-8558 (JP); OHTSUKA, Kenichi, Hamamatsu-shi, Shizuoka 435-8558 (JP)
(74) Representative: Hoffmann Eitle
(86) International application number: PCT/JP2023/037087
(87) International publication number: WO 2024/171516

(57) **Abstract**

A spectrometer includes a light incident portion; a spectroscopic portion that spectrally separates light from the light incident portion; and a light detection portion that detects the light spectrally separated by the spectroscopic portion. The light incident portion outputs a first light in a first wavelength range and a second light in a second wavelength range. The first wavelength range includes a longer wavelength than the second wavelength range. The spectroscopic portion spectrally separates the first light and the second light. An Nth-order light of the first light is incident on a first light detection region of the light detection portion and is detected by the light detection portion, and an Mth-order light of the second light is incident on a second light detection region of the light detection portion and is detected by the light detection portion. Here, N and M are integers other than 0 where an absolute value of N is smaller than an absolute value of M.

## Description

### Technical Field

The present disclosure relates to a spectrometer, a spectroscopic measurement system, and a spectroscopic detection method.

### Background Art

Patent Documents 1 and 2 describe a spectroscopic device that spectrally separates incident light using a diffraction grating, and that detects the spectrally separated light using a light detection portion.

### Citation List

### Patent Literature

Patent Literature 1: Japanese Unexamined Patent Publication No. S57-111422
Patent Literature 2: Japanese Unexamined Patent Publication H8-254464

### Summary of Invention

### Technical Problem

In the spectroscopic device as described above, widening the detectable wavelength range may be required. However, it is difficult to enable the diffraction grating to diffract light in a wide wavelength range, and even if a diffraction grating capable of diffracting light in a wide wavelength range can be realized, it is concerned that the diffraction efficiency is low.

Therefore, an objective of one aspect of the present disclosure is to provide a spectrometer, a spectroscopic measurement system, and a spectroscopic detection method capable of spectrally separating and detecting light in a wide wavelength range with sufficient diffraction efficiency.

### Solution to Problem

A spectrometer according to one aspect of the present disclosure is [1] "a spectrometer including: a light incident portion; a spectroscopic portion that spectrally separates light from the light incident portion; and a light detection portion that detects the light spectrally separated by the spectroscopic portion. The light incident portion outputs a first light in a first wavelength range and a second light in a second wavelength range, and the first wavelength range includes a longer wavelength than the second wavelength range. The spectroscopic portion spectrally separates the first light and the second light. An Nth-order light of the first light is incident on a first light detection region of the light detection portion and is detected by the light detection portion, and an Mth-order light of the second light is incident on a second light detection region of the light detection portion and is detected by the light detection portion, where N and M are integers other than 0 where an absolute value of N is smaller than an absolute value of M."

In the spectrometer, the light incident portion outputs the first light in the first wavelength range including a longer wavelength than the second wavelength range, and the second light in the second wavelength range, and the spectroscopic portion spectrally separates the first light and the second light. Then, the Nth-order light of the first light is incident on the first light detection region of the light detection portion and is detected by the light detection portion, and the Mth-order light of the second light is incident on the second light detection region of the light detection portion and is detected by the light detection portion. Accordingly, the Nth-order light of the first light and the Mth-order light of the second light which have a relatively high diffraction efficiency can be detected in the light detection portion, and as a result, light in a wide wavelength range can be spectrally separated and detected with sufficient diffraction efficiency.

The spectrometer according to one aspect of the present disclosure may be [2] "the spectrometer according to [1] further including a filter that is disposed between the spectroscopic portion and the light detection portion, and that blocks a diffracted light of the first light other than the Nth-order light and a diffracted light of the second light other than the Mth-order light." In this case, the Nth-order light of the first light and the Mth-order light of the second light can be more reliably detected in the light detection portion.

The spectrometer according to one aspect of the present disclosure may be [3] "the spectrometer according to [1] or [2], in which the light incident portion includes a first slit from which the first light is emitted, and a second slit from which the second light is emitted." In this case, the first light and the second light can be output from the light incident portion.

The spectrometer according to one aspect of the present disclosure may be [4] "the spectrometer according to [3], in which the light incident portion further includes at least one of a first filter that is disposed in the first slit and that blocks light outside the first wavelength range and a second filter that is disposed in the second slit and that blocks light outside the second wavelength range." In this case, the first light and/or the second light can be more reliably output from the light incident portion.

The spectrometer according to one aspect of the present disclosure may be [5] "the spectrometer according to [1] or [2], in which the light incident portion includes a light splitting element that splits an incident light into the first light and the second light." In this case, the first light and the second light can be output from the light incident portion.

The spectrometer according to one aspect of the present disclosure may be [6] "the spectrometer according to [5], in which the light splitting element includes a dichroic surface that transmits one of the first light and second light and that reflects the other of the first light and the second light, and at least one reflecting surface that reflects the first light or the second light that has transmitted through the dichroic surface or that is reflected by the dichroic surface." In this case, the light splitting element that splits the incident light into the first light and the second light can be suitably configured.

The spectrometer according to one aspect of the present disclosure may be [7] "the spectrometer according to any one of [1] to [6], in which the first light detection region and the second light detection region are arranged along a spectroscopic direction of the spectroscopic portion." In this case, the Nth-order light of the first light and the Mth-order light of the second light can be suitably detected in the light detection portion.

The spectrometer according to one aspect of the present disclosure may be [8] "the spectrometer according to [7], in which each of the first light detection region and the second light detection region includes a plurality of pixels arranged along the spectroscopic direction." In this case, the Nth-order light of the first light and the Mth-order light of the second light can be suitably detected in the light detection portion.

The spectrometer according to one aspect of the present disclosure may be [9] "the spectrometer according to [7], in which each of the first light detection region and the second light detection region includes a plurality of pixels arranged along the spectroscopic direction and a direction intersecting the spectroscopic direction." In this case, for example, not only wavelength information that is information along the spectroscopic direction, but also position information that is information along the direction intersecting the spectroscopic direction can be acquired.

The spectrometer according to one aspect of the present disclosure may be [10] "the spectrometer according to any one of [1] to [9], in which the light detection portion consists of a single sensor element." In this case, the configuration of the spectrometer can be simplified.

The spectrometer according to one aspect of the present disclosure may be [11] "the spectrometer according to any one of [1] to [10], in which the absolute value of N is 1 and the absolute value of M is 2." In this case, light in a wide wavelength range can be spectrally separated and detected with sufficient diffraction efficiency.

The spectrometer according to one aspect of the present disclosure may be [12] "the spectrometer according to any one of [1] to [11], in which the spectroscopic portion includes a spectroscopic element capable of spectrally separating at least light in a wavelength range of 1100 nm to 1500 nm into a first-order diffracted light." When the spectroscopic portion can diffract light in a wide wavelength range in this way, it is concerned that the diffraction efficiency is low; however, in the spectrometer, for the reasons described above, even in such a case, light in a wide wavelength range can be spectrally separated and detected with sufficient diffraction efficiency.

The spectrometer according to one aspect of the present disclosure may be [13] "the spectrometer according to [3] or [4], in which a width of the first slit is equal to a width of the second slit." In this case, the configuration of the light incident portion can be simplified.

The spectrometer according to one aspect of the present disclosure may be [14] "the spectrometer according to [3] or [4], in which a width of the first slit is different from a width of the second slit, or at least one of the width of the first slit and the width of the second slit is variable." In this case, the difference in wavelength resolution or detection sensitivity between the Nth-order light of the first light and the Mth-order light of the second light can be adjusted by the widths of the slits.

The spectrometer according to one aspect of the present disclosure may be [14] "the spectrometer according to [3] or [4], in which the light incident portion further includes an attachment portion to which one slit member selected from a plurality of slit members, in each of which the first slit and the second slit are formed, is attached, and the plurality of slit members differ in at least one of a width of the first slit, a width of the second slit, and a distance between the first slit and the second slit." In this case, the difference in wavelength resolution or detection sensitivity between the Nth-order light of the first light and the Mth-order light of the second light can be adjusted by selecting the slit member.

A spectroscopic measurement system according to one aspect of the present disclosure is [16] "a spectroscopic measurement system including: the spectrometer according to any one of [1] to [15]; a conveying portion that conveys an object along a conveying direction; a light irradiation portion that irradiates the object, which is conveyed by the conveying portion, with light; and a processing portion. The light emitted from the light irradiation portion for irradiation and reflected or scattered by the object is incident on the light incident portion, is spectrally separated by the spectroscopic portion, and is detected by the light detection portion. The processing portion generates a spectroscopic image based on a detection result of the light detection portion." According to the spectroscopic measurement system, for the reasons described above, light in a wide wavelength range can be spectrally separated and detected in the spectrometer with sufficient diffraction efficiency, and as a result, a spectroscopic image of light from the object can be satisfactorily generated.

A spectroscopic measurement system according to one aspect of the present disclosure is [17] "a spectroscopic measurement system including: the spectrometer according to [3] or [4]; a conveying portion that conveys an object along a conveying direction; a light irradiation portion that irradiates the object, which is conveyed by the conveying portion, with light; and a processing portion. The light emitted from the light irradiation portion for irradiation and reflected or scattered by the object is incident on the light incident portion, is spectrally separated by the spectroscopic portion, and is detected by the light detection portion. The processing portion generates a spectroscopic image based on a detection result of the light detection portion." According to the spectroscopic measurement system, for the reasons described above, light in a wide wavelength range can be spectrally separated and detected in the spectrometer with sufficient diffraction efficiency, and as a result, a spectroscopic image of light from the object can be satisfactorily generated.

The spectroscopic measurement system according to one aspect of the present disclosure may be [18] "the spectroscopic measurement system according to [17], in which the light irradiation portion irradiates the object with light including the first light at a first position in the conveying direction, and irradiates the object with light including the second light at a second position spaced apart from the first position in the conveying direction." With such a configuration as well, a spectroscopic image of light from the object can be satisfactorily generated.

The spectroscopic measurement system according to one aspect of the present disclosure may be [19] "the spectroscopic measurement system according to [18], in which when the processing portion generates a spectroscopic image based on the detection result of the light detection portion, the processing portion generates the spectroscopic image by combining a detection result of the first light and a detection result of the second light by the light detection portion based on a conveying speed of the object by the conveying portion." In this case, a spectroscopic image can be generated in consideration of a deviation in detection timing between the first position and the second position.

The spectroscopic measurement system according to one aspect of the present disclosure may be [20] "the spectroscopic measurement system according to [17], in which the light irradiation portion irradiates the object with light including the first light at a first position in the conveying direction, and irradiates the object with light including the second light at a second position spaced apart from the first position in a direction intersecting the conveying direction." With such a configuration as well, a spectroscopic image of light from the object can be satisfactorily generated.

The spectroscopic measurement system according to one aspect of the present disclosure may be [21] "the spectroscopic measurement system according to [17], in which the light irradiation portion includes a scanning portion that scans a irradiation position of the light on the object along a direction intersecting the conveying direction." With such a configuration as well, a spectroscopic image of light from the object can be satisfactorily generated.

The spectroscopic measurement system according to one aspect of the present disclosure may be [22] "the spectroscopic measurement system according to any one of [17] to [21], in which the light irradiation portion includes a light source and a light splitting element, and the light splitting element splits light from the light source into light including the first light and light including the second light." In this case, the object can be irradiated with the light including the first light and the light including the second light, and the reflected lights or scattered lights of these lights can be incident on the light incident portion of the spectrometer.

A spectroscopic detection method according to one aspect of the present disclosure is [23] "a spectroscopic detection method using the spectrometer according to any one of [1] to [15], the method including, in the following order: a step of causing the light incident portion to output the first light and the second light; a step of causing the spectroscopic portion to spectrally separate the first light and the second light; and a step of causing the Nth-order light of the first light to be incident on the first light detection region and causing the light detection portion to detect the Nth-order light, and causing the Mth-order light of the second light to be incident on the second light detection region and causing the light detection portion to detect the Mth-order light." According to the spectroscopic detection method, for the reasons described above, light in a wide wavelength range can be spectrally separated and detected with sufficient diffraction efficiency.

### Advantageous Effects of Invention

According to one aspect of the present disclosure, it is possible to provide the spectrometer, the spectroscopic measurement system, and the spectroscopic detection method capable of spectrally separating and detecting light in a wide wavelength range with sufficient diffraction efficiency.

### Brief Description of Drawings

[FIG. 1] FIG. 1 is a configuration diagram of a spectroscopic measurement system according to an embodiment.
[FIG. 2] FIG. 2 is a diagram showing a guide member.
[FIG. 3] FIG. 3 is a configuration diagram of a spectrometer.
[FIG. 4] FIG. 4 is a diagram for describing a method for detecting light in the spectrometer"
[FIG. 5] (a) and (b) in FIG. 5 are graphs for describing an improvement in diffraction efficiency by the spectroscopic measurement system.
[FIG. 6] FIG. 6 is a diagram for describing a method for detecting light in a first modification example.
[FIG. 7] FIG. 7 is a configuration diagram of a spectroscopic measurement system according to a second modification example.
[FIG. 8] FIG. 8 is a configuration diagram of a spectroscopic measurement system according to a third modification example.
[FIG. 9] FIG. 9 is a diagram for describing a method for detecting light in a spectrometer of the third modification example.
[FIG. 10] FIG. 10 is a configuration diagram of a spectroscopic measurement system according to a fourth modification example.
[FIG. 11] FIG. 11 is a configuration diagram of a spectroscopic measurement system according to a fifth modification example.
[FIG. 12] FIG. 12 is a diagram for describing a method for detecting light in a spectrometer of the fifth modification example.
[FIG. 13] FIG. 13 is a configuration diagram of a spectroscopic measurement system according to a sixth modification example.
[FIG. 14] FIG. 14 is a diagram for describing a method for detecting light in a spectrometer of the sixth modification example.
[FIG. 15] (a), (b), and (c) in FIG. 15 are diagrams for describing other modification examplesx
[FIG. 16] FIG. 16 is a diagram for describing another modification example.
[FIG. 17] (a), (b) and (c) in FIG. 17 are diagrams for describing other examples of light splitting elements.
[FIG. 18] FIG. 18 is a diagram for describing another example of a light splitting element.

### Description of Embodiments

Hereinafter, an embodiment of the present disclosure will be described in detail with reference to the drawings. In the following description, the same reference signs are used for the same or corresponding elements, and duplicate descriptions will be omitted.

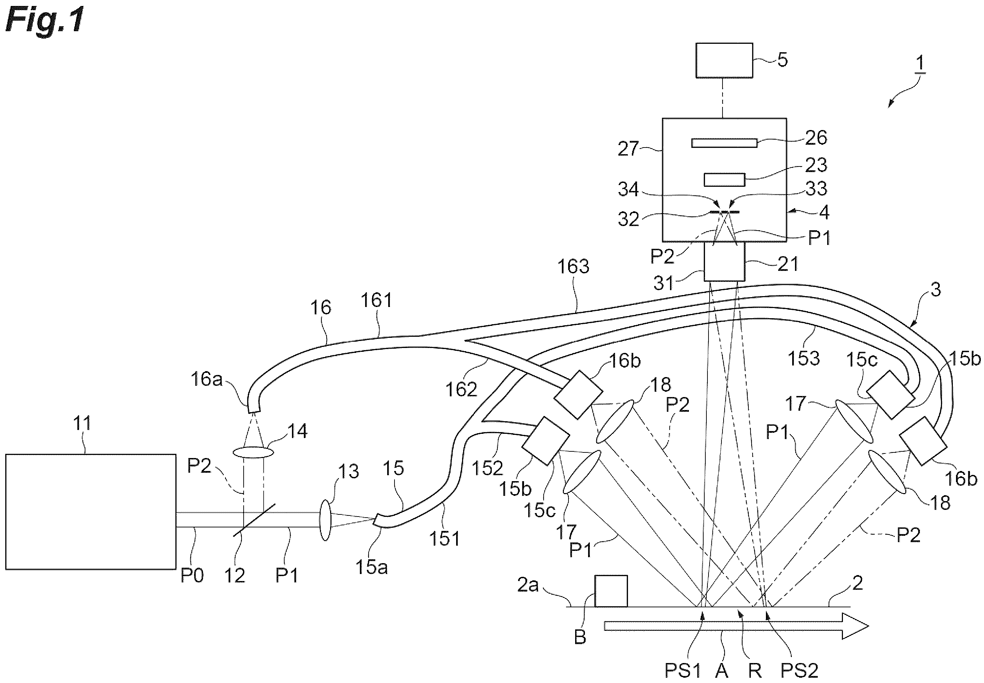

As shown in FIG. 1, a spectroscopic measurement system 1 includes a conveying portion 2, a light irradiation portion 3, a spectrometer 4, and a processing portion 5. In the spectroscopic measurement system 1, an object B that is conveyed along a conveying direction A by conveying portion 2 is irradiated with light from the light irradiation portion 3 The light emitted from the light irradiation portion 3 for irradiation and reflected or scattered by the object B is incident on the spectrometer 4, and is spectrally separated and detected in the spectrometer 4. A spectroscopic image is generated in the processing portion 5 based on the detection result. The spectroscopic image is an image including position information on the object B as well as wavelength information (spectral information) at the position. In this way, in the spectroscopic measurement system 1, the spectrometer 4 is configured as a hyperspectral camera, and hyperspectral observation of the object B is performed. The spectrometer 4 can also be regarded as a camera module or a spectroscopic measurement module.

The conveying portion 2 is a belt conveyor in this example, and conveys the object B placed on a conveying surface 2a (placement surface), which is the surface of the belt, along the conveying direction A. When the object B is observed (when the spectroscopic measurement system 1 is operated), the object B that is conveyed by the conveying portion 2 is irradiated with the light from the light irradiation portion 3. Accordingly, observation can be performed while changing the irradiation position of the light on the object B, and the entirety of the object B can be observed.

The light irradiation portion 3 includes a light source 11, a light splitting element 12, lenses 13 and 14, a first guide member 15, a second guide member 16, a pair of lenses 17, and a pair of lenses 18. The light source 11 is, for example, a wide wavelength range light source configured as a halogen lamp light source, a supercontinuum light source (SC light source), or the like. The light source 11 outputs, for example, an irradiation light P0 that is light in a wavelength range of 500 nm to 1600 nm.

The light splitting element 12 splits the irradiation light P0 from the light source 11 into a first irradiation light P1 and a second irradiation light P2. In this example, the optical light splitting element 12 is a dichroic mirror, and splits the irradiation light P0 into the first irradiation light P1 in a predetermined wavelength range and the second irradiation light P2 in a predetermined wavelength range by reflecting the second irradiation light P2 while transmitting the first irradiation light P1. The wavelength range of the first irradiation light P1 includes a longer wavelength than the wavelength range of the second irradiation light P2. In this example, the wavelength range of the first irradiation light P1 is 900 nm to 1600 nm, and the wavelength range of the second irradiation light is 500 nm to 900 nm. Namely, the wavelength range of the first irradiation light P1 does not overlap the wavelength range of the second irradiation light, and the entire wavelength range of the first irradiation light P1 is larger than the wavelength range of the second irradiation light. The first irradiation light P1 is light including a first light L1 to be described later, and the second irradiation light P2 is light including a second light L2 to be described later.

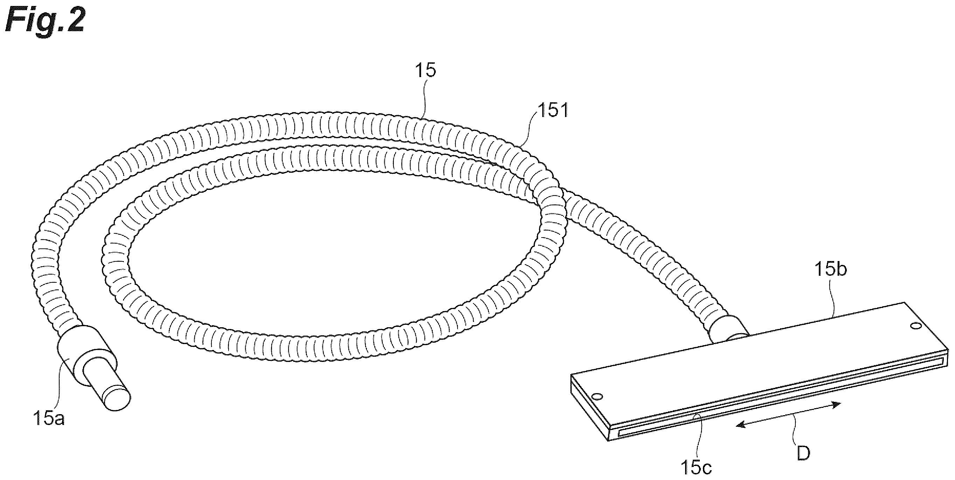

The first irradiation light P1 is focused by the lens 13, and is incident on the first guide member 15. The first guide member 15 includes a first portion 151, a second portion 152, and a third portion 153. Each of the portions 151 to 153 is formed in a tubular shape. One end of the first portion 151 constitutes a light incident portion 15a that is a portion through which the first irradiation light P1 is incident on the inside of the first guide member 15. One ends of the second portion 152 and the third portion 153 is connected to the other end of the first portion 151. Namely, the first guide member 15 has a structure in which the first guide member 15 is branched into the second portion 152 and the third portion 153 at the other end of the first portion 151. A light emitting portion 15b (FIG. 2) that is a portion through which the first irradiation light P1 is emitted from the first guide member 15 is provided at the other end of each of the second portion 152 and the third portion 153. In the first guide member 15, the first irradiation light P1 incident from the light incident portion 15a is guided to be emitted from each of the light emitting portions 15b. Incidentally, FIG. 2 shows an example of the first guide member 15 which does not include the second portion 152 and the third portion 153 and in which the light emitting portion 15b is provided at one end of the first portion 151.

In this example, the light emitting portion 15b is formed in a flat rectangular parallelepiped shape, and has a light emitting opening 15c having a rectangular shape. Therefore, when a direction parallel to the long sides of the light emitting opening 15c is defined as a direction D, the first irradiation light P1 spread in the direction D is emitted from the light emitting portion 15b. The light emitting portion 15b is disposed such that the direction D is parallel to the conveying surface 2a and is perpendicular to the conveying direction A. In FIG. 1, the direction D is a direction perpendicular to the drawing sheet. Accordingly, the object B is irradiated with the first irradiation light P1 spread in a direction perpendicular to the conveying direction A.

When the position where the object B is irradiated with the first irradiation light P1 and the second irradiation light P2 is defined as an irradiation position R, a pair of the light emitting portions 15b are disposed on one side and the other side in the conveying direction A with respect to the irradiation position R. The first irradiation light P1 emitted from one light emitting portion 15b is focused by one of the pair of lenses 17, and irradiates the object B at the irradiation position R from the one side (for example, upstream side) in the conveying direction A. The first irradiation light P1 emitted from the other light emitting portion 15b is focused by the other of the pair of lenses 17, and irradiates the object B at the irradiation position R from the other side (for example, downstream side) in the conveying direction A. More specifically, in this example, the object B is irradiated with the first irradiation light P1, which is emitted from each of the light emitting portions 15b, at a first position PS1 in the conveying direction A. Each of the lenses 17 is configured as, for example, a cylindrical lens in order to focus the first irradiation light P1 spread in the direction perpendicular to the conveying direction A. In this way, by irradiating the object B with light from both sides in the conveying direction A, the object B having a three-dimensional shape can also be suitably irradiated with the light.

The second irradiation light P2 is focused by the lens 14, and is incident on the second guide member 16. The second guide member 16 includes a first portion 161, a second portion 162, and a third portion 163. Each of the portions 161 to 163 is formed in a tubular shape. One end of the first portion 161 constitutes a light incident portion 16a that is a portion through which the second irradiation light P2 is incident on the inside of the second guide member 16. One ends of the second portion 162 and the third portion 163 is connected to the other end of the first portion 161. Namely, the second guide member 16 has a structure in which the second guide member 16 is branched into the second portion 162 and the third portion 163 at the other end of the first portion 161. A light emitting portion 16b that is a portion through which the second irradiation light P2 is emitted from the second guide member 16 is provided at the other end of each of the second portion 162 and the third portion 163. In the second guide member 16, the second irradiation light P2 incident from the light incident portion 16a is guided to be emitted from each of the light emitting portions 16b. For example, the light emitting portions 16b are configured in the same manner as the light emitting portions 15b of the first guide member 15 described above.

The light emitting portion 16b is formed in a flat rectangular parallelepiped shape, and has a light emitting opening having a rectangular shape. The light emitting portion 16b is disposed such that a direction parallel to the long side of the light emitting opening is parallel to the conveying surface 2a and is perpendicular to the conveying direction A. Accordingly, the object B is irradiated with the second irradiation light P2 spread in the direction perpendicular to the conveying direction A (the direction perpendicular to the drawing sheet of FIG. 1).

A pair of the light emitting portions 16b are disposed on the one side and the other side in the conveying direction A with respect to the irradiation position R. The second irradiation light P2 emitted from one light emitting portion 16b is focused by one of the pair of lenses 18, and irradiates the object B at the irradiation position R from the one side (for example, upstream side) in the conveying direction A. The second irradiation light P2 emitted from the other light emitting portion 16b is focused by the other of the pair of lenses 18, and irradiates the object B at the irradiation position R from the other side (for example, downstream side) in the conveying direction A. More specifically, in this example, the object B is irradiated with the second irradiation light P2, which is emitted from each of the light emitting portions 16b, at a second position PS2 in the conveying direction A. The second position PS2 is spaced apart from the first position PS1 in the conveying direction A, and in this example, is located downstream of the first position PS1 in the conveying direction A. Each of the lenses 18 is configured as, for example, a cylindrical lens in order to focus the second irradiation light P2 spread in the direction perpendicular to the conveying direction A.

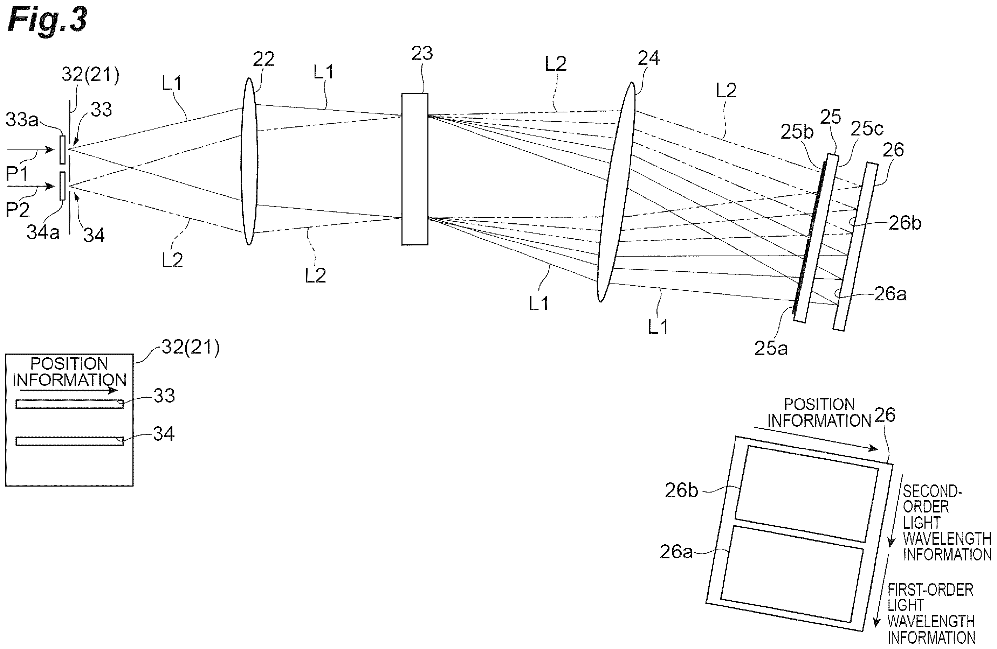

The first irradiation light P1 and the second irradiation light P2 emitted from the light irradiation portion 3 for irradiation and reflected or scattered by the object B are incident on the spectrometer 4. As shown in FIGS. 1 and 3, the spectrometer 4 includes a light incident portion 21, a lens 22, a spectroscopic portion 23, a lens 24, a filter 25, a light detection portion 26, and a housing 27. The housing 27 is formed, for example, in a box shape, and accommodates the lens 22, a spectroscopic portion 23, the lens 24, the filter 25, and the light detection portion 26. Concave mirrors may be used instead of the lens 22 and the lens 24.

The first irradiation light P1 and the second irradiation light P2 are incident on the light incident portion 21. The light incident portion 21 includes a lens portion 31 and a slit member 32. The lens portion 31 is provided, for example, on one side surface of the housing 27. In the spectrometer 4, the lens portion 31 is disposed to face the irradiation position R. The lens portion 31 focuses the first irradiation light P1 toward a first slit 33 of the slit member 32, and focuses the second irradiation light P2 toward a second slit 34 of the slit member 32.

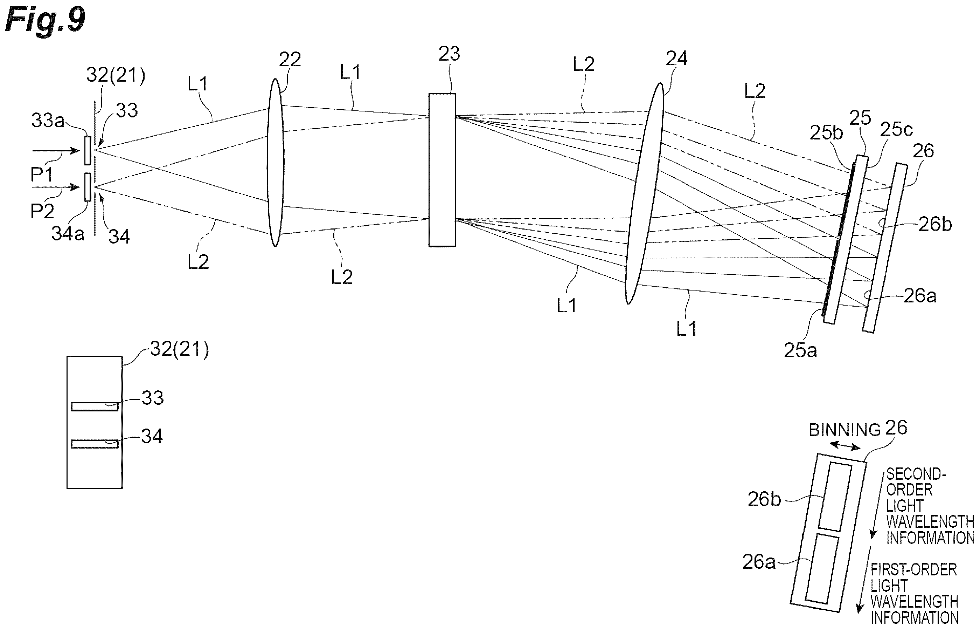

The slit member 32 is disposed to face the lens portion 31. The slit member 32 is, for example, a rectangular flat plate-shaped member in which the first slit 33 and the second slit 34 are formed. In FIG. 3, the slit member 32 as viewed from the front is shown below the slit member 32 as viewed from the side. This point also applies to FIGS. 9, 12, and 14. Each of the first slit 33 and the second slit 34 is formed in a rectangular shape, and the first slit 33 and the second slit 34 are arranged in a direction parallel to the short sides thereof (a direction perpendicular to the long sides). In this example, a width of the first slit 33 is equal to a width of the second slit 34. Incidentally, the width of the slits 33 and 34 are a length in a direction perpendicular to an extending direction of the slits 33 and 34. The slit member 32 is disposed such that the extending direction (the direction parallel to the long sides) of the slits 33 and 34 is parallel to the conveying surface 2a and is perpendicular to the conveying direction A (the arrangement direction of the slits 33 and 34 is parallel to the conveying direction A).

The first irradiation light P1 is incident on the first slit 33, and the second irradiation light P2 is incident on the second slit 34. The first slit 33 allows at least a portion of the first irradiation light P1 to pass therethrough, and emits the at least a portion of the first irradiation light P1 toward the lens 22. The second slit 34 allows at least a portion of the second irradiation light P2 to pass therethrough, and emits the at least a portion of the second irradiation light P2 toward the lens 22.

In this example, a first filter 33a is disposed (inserted) in the first slit 33, and a second filter 34a is disposed (inserted) in the second slit 34. The first filter 33a is a bandpass filter that transmits light in a first wavelength range and that blocks light outside the first wavelength range, and the second filter 34a is a bandpass filter that transmits light in a second wavelength range and that blocks light outside the second wavelength range. In this example, the first wavelength range is 950nm to 1600nm, and the second wavelength range is 400nm to 1000nm. Accordingly, the first light L1 in the first wavelength range is emitted from the first slit 33, and the second light L2 in the second wavelength range is emitted from the second slit 34. Namely, the first light L1 and the second light L2 are output from the slit member 32.

More specifically, in this example, since the wavelength range of the first irradiation light P1 is 900 nm to 1600 nm, and the first wavelength range transmitted by the first filter 33a is 950 nm to 1600 nm, the first irradiation light P1 in a wavelength range of 900 to 950 nm is blocked, and the wavelength range of the first light L1 is 900 to 1600. Since the wavelength range of the second irradiation light P2 is 500 nm to 900 nm, and the second wavelength range transmitted by the second filter 34a is 400 nm to 1000 nm, the entire second irradiation light P2 transmits through the second filter 34a, and the wavelength range of the second light L2 is 500 nm to 900 nm. The first wavelength range (long wavelength range) includes a longer wavelength than the second wavelength range (short wavelength range). In this example, the first wavelength range overlaps the second wavelength range in a range of 950 nm to 1000 nm, and is larger than the second wavelength range in other ranges.

In this way, the light incident portion 21 outputs the first light L1 in the first wavelength range and the second light L2 in the second wavelength range. As described above, the slit member 32 is disposed such that the extending direction of the slits 33 and 34 is perpendicular to the conveying direction A, so that the position of the first light L1 and the second light L2, which are output from the slits 33 and 34, in the extending direction of the slits 33 and 34 represents position information on the object B along the direction perpendicular to the conveying direction A (FIG. 3).

The first light L1 and the second light L2 from the light incident portion 21 are focused by the lens 22, and is incident on the spectroscopic portion 23. The spectroscopic portion 23 is, for example, a transmissive spectroscopic element composed of a blazed diffraction grating. The spectroscopic portion 23 may be, for example, a reflective spectroscopic element composed of a blazed diffraction grating. In addition, the spectroscopic portion 23 may further have a function of focusing or diverging light by itself. The spectroscopic portion 23 is configured to be able to spectrally separate at least light in a wavelength range of 1100 nm to 1500 nm into a first-order diffracted light. Incidentally, in this case, it is preferable that the diffraction efficiency of the first-order diffracted light is, for example, 30% or more. The spectroscopic portion 23 spectrally separates the first light L1 and the second light L2. In this example, the spectroscopic portion 23 is disposed such that a spectroscopic direction is parallel to the arrangement direction of the slits 33 and 34 in the light incident portion 21 when viewed in an optical axis direction (a direction parallel to a traveling direction of light incident on the spectroscopic portion 23).

The first light L1 and the second light L2 spectrally separated by the spectroscopic portion 23 are focused by the lens 24, and are incident on the filter 25. The filter 25 is disposed between the spectroscopic portion 23 and the light detection portion 26. The filter 25 includes a body portion 25c having a plate shape and a filter 25a and a filter 25b disposed on the body portion 25c. The first light L1 is incident on the filter 25a, and the second light L2 is incident on the filter 25b.

The filter 25a transmits a first-order light (first-order diffracted light) of the diffracted light of the first light L1, and blocks the diffracted light other than the first-order light, and the filter 25b transmits a second-order light (second-order diffracted light) of the diffracted light of the second light L2, and blocks the diffracted light other than the second-order light. Namely, the first light L1 and the second light L2 from the spectroscopic portion 23 include a zeroth-order light, a first-order light, a second-order light, a third-order light, and so on; however, the filter 25a transmits only the first-order light of the diffracted light of the first light L1, and the filter 25b transmits only the second-order light of the diffracted light of the second light L2.

The first-order light of the first light L1 and the second-order light of the second light L2 that have transmitted through the filter 25 are detected by the light detection portion 26. The light detection portion 26 is, for example, an image sensor composed of a single sensor element, and includes a first light detection region 26a and a second light detection region 26b. In FIG. 3, the light detection portion 26 as viewed from the front is shown below the light detection portion 26 as viewed from the side. This point also applies to FIGS. 9, 12, and 14.

In this example, the first light detection region 26a and the second light detection region 26b are formed in a rectangular shape, and the first light detection region 26a and the second light detection region 26b are arranged along the spectroscopic direction of the spectroscopic portion 23. Each of the first light detection region 26a and the second light detection region 26b includes a plurality of pixels arranged along both the spectroscopic direction and a direction perpendicular to the spectroscopic direction. Namely, in each of the light detection regions 26a and 26b, the plurality of pixels are disposed side by side in a two-dimensional manner in a matrix pattern.

The first-order light of the first light L1 is incident on the first light detection region 26a and is detected by the light detection portion 26, and the second-order light of the second light L2 is incident on the second light detection region 26b and is detected by the light detection portion 26. As described above, the spectroscopic direction of the spectroscopic portion 23 is parallel to the arrangement direction of the slits 33 and 34 of the light incident portion 21, and the first light detection region 26a and the second light detection region 26b are arranged along the spectroscopic direction of the spectroscopic portion 23, so that as shown in FIG. 3, the position of the first-order light of the first light L1 and the second-order light of the second light L2, which are detected by the light detection regions 26a and 26b, in the direction perpendicular to the arrangement direction (spectroscopic direction) of the light detection regions 26a and 26b represents position information on the object B along the direction perpendicular to the conveying direction A, and the position in the arrangement direction represents wavelength information.

The processing portion 5 is communicably connected to the light detection portion 26, and generates a spectroscopic image based on the detection result of the light detection portion 26. The processing portion 5 is composed of, for example, a computer including a processor (CPU) and a RAM and a ROM that are recording media. As described above, in this example, the object B is irradiated with the first irradiation light P1 at the first position PS1 in the conveying direction A, and the object B is irradiated with the second irradiation light P2 at the second position PS2 spaced apart from the first position PS1 in the conveying direction A. Therefore, when the processing portion 5 generates a spectroscopic image, the processing portion 5 generates the spectroscopic image by combining the detection result of the first light L1 and the detection result of the second light L2 by the light detection portion 26 based on a conveying speed of the object B by the conveying portion 2. Namely, the processing portion 5 combines the detection results of the first light L1 and the second light L2 in consideration of the conveying speed of the object B such that the first light L1 and the second light L2 reflected and detected at the same position on the object B constitute one spectroscopic image.

A method for observing the object B in the spectroscopic measurement system 1 will be described. As described above, first, the object B that is conveyed along the conveying direction A by the conveying portion 2 is irradiated with the first irradiation light P1 and the second irradiation light P2 from the light irradiation portion 3 (irradiation step). Subsequently, the first irradiation light P1 and the second irradiation light P2 emitted from the light irradiation portion 3 for irradiation and reflected or scattered by the object B are incident on the spectrometer 4, and are spectrally separated and detected in the spectrometer 4 (spectroscopic step). Subsequently, a spectroscopic image is generated in the processing portion 5 based on the detection result of the spectrometer 4 (image generation step). The spectroscopic step can also be regarded as a spectroscopic detection method by the spectrometer 4. The spectroscopic step includes, in order, a first step of causing the light incident portion 21 to output the first light L1 and the second light L2; a second step of causing the spectroscopic portion 23 to spectrally separate the first light L1 and the second light L2; and a third step of causing the first-order light of the first light L1 to be incident on the first light detection region 26a and causing the light detection portion 26 to detect the first-order light, and causing the second-order light of the second light L2 to be incident on the second light detection region 26b and causing the light detection portion 26 to detect the second-order light. In this way, in the spectrometer 4, the first light L1 and the second light L2 are spectrally separated simultaneously (in parallel), and the first-order light of the first light L1 and the second-order light of the second light L2 obtained by the spectroscopy are detected simultaneously (in parallel).

### [Functions and effects]

In the spectrometer 4, the light incident portion 21 outputs the first light L1 in the first wavelength range including a longer wavelength than the second wavelength range, and the second light L2 in the second wavelength range, and the spectroscopic portion 23 spectrally separates the first light L1 and the second light L2. Then, the first-order light of the first light L1 is incident on the first light detection region 26a of the light detection portion 26 and is detected by the light detection portion 26, and the second-order light of the second light L2 is incident on the second light detection region 26b of the light detection portion 26 and is detected by the light detection portion 26. Accordingly, the first-order light of the first light L1 and the second-order light of the second light L2 which have a relatively high diffraction efficiency can be detected in the light detection portion 26, and as a result, light in a wide wavelength range can be spectrally separated and detected with sufficient diffraction efficiency.

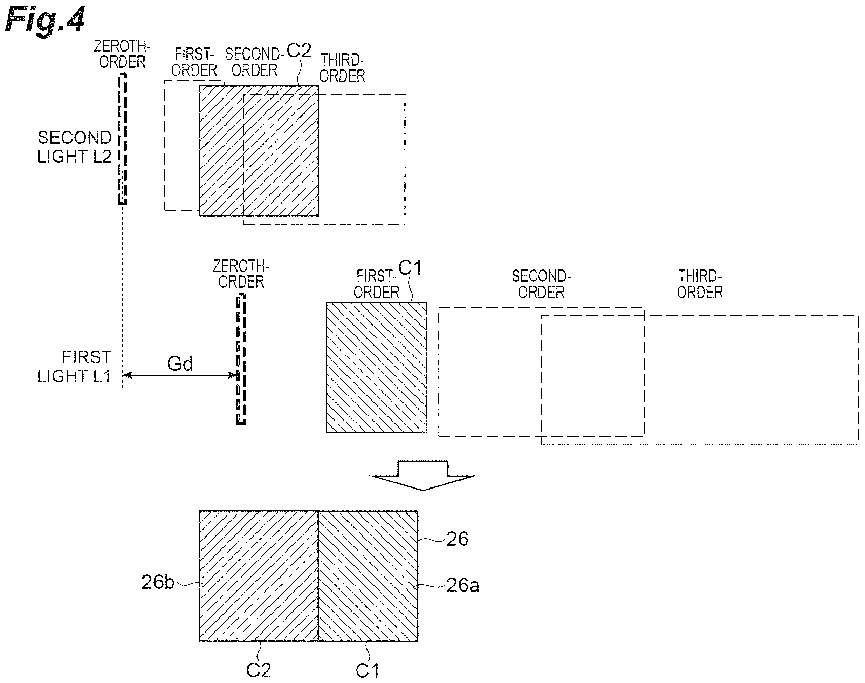

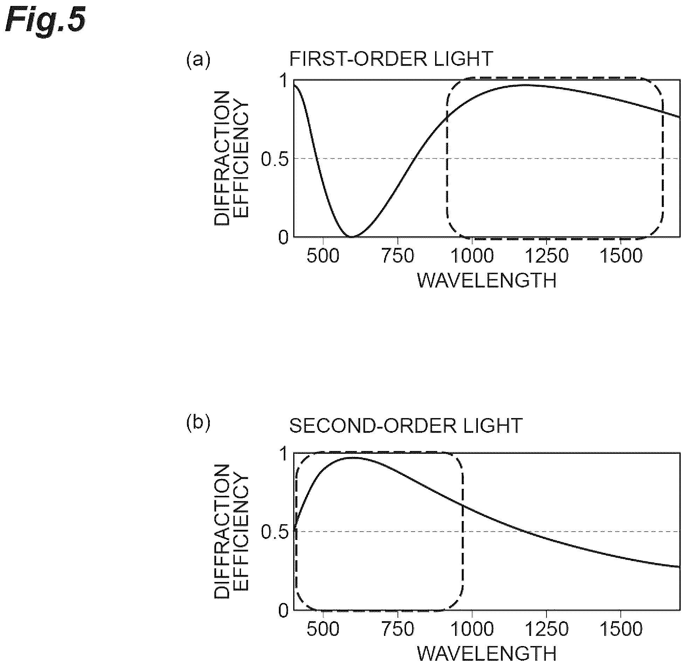

This point will be further described with reference to FIGS. 4 and 5. As shown in FIG. 4, in the above-described example, the first-order light of the diffracted light of the first light L1 is detected in the first light detection region 26a, and the second-order light of the diffracted light of the second light L2 is detected in the second light detection region 26b. In FIG. 4, a detection region C1 of the first-order light of the first light L1 is indicated by hatching, and the incident regions of the zeroth-order light, the second-order light, and the third-order light at positions corresponding to the light detection regions 26a and 26b are indicated by dashed lines. The zeroth-order light, the second-order light, and the third-order light are blocked by the filter 25a described above. In addition, a detection region C2 of the second-order light of the second light L2 is indicated by hatching, and the incident regions of the zeroth-order light, the first-order light, and the third-order light at positions corresponding to the light detection regions 26a and 26b are indicated by dashed lines. The zeroth-order light, the first-order light, and the third-order light are blocked by the filter 25b described above. The zeroth-order lights of the first light L1 and the second light L2 are incident on positions corresponding to the first slit 33 and the second slit 34 of the light incident portion 21. As shown in FIG. 4, when the distance between the first slit 33 and the second slit 34 is d and the magnification of the spectroscopic portion 23 is G, the zeroth-order lights of the first light L1 and the second light L2 are incident on positions spaced apart from each other by Gd. Incidentally, in FIG. 4, the diffracted lights of the first light L1 and the second light L2 are shown spaced apart in an up-down direction; however, in practice, the diffracted lights of the first light L1 and the second light L2 are located at the same position in the up-down direction (the direction perpendicular to the spectroscopic direction) in the figure.

(a) and (b) in FIG. 5 are graphs for describing an improvement in diffraction efficiency by the spectroscopic measurement system 1. (a) in FIG. 5 shows an example of the diffraction efficiency of the first-order light, and (b) in FIG. 5 shows an example of the diffraction efficiency of the second-order light. In (a) of FIG. 5, a portion corresponding to the first-order light of the first light L1 is indicated by a dashed line, and in (b) of FIG. 5, a portion corresponding to the second-order light of the second light L2 is indicated by a dashed line. From (a) in FIG. 5, it can be seen that, for example, when light is spectrally separated by a diffraction grating capable of diffracting light in a wavelength range, and the first-order light thereof is detected, the diffraction efficiency is low in some wavelength ranges (in this example, a range on a short wavelength side).

As shown in (a) and (b) of FIG. 5, in this example, in the first wavelength range (950 nm to 1600 nm) corresponding to the first light L1, the diffraction efficiency of the first-order light is higher than the diffraction efficiency of the second-order light, whereas in the second wavelength range (400 nm to 1000 nm) corresponding to the second light L2, the diffraction efficiency of the second-order light is higher than the diffraction efficiency of the first-order light. Therefore, in the spectroscopic measurement system 1, the first-order light of the first light L1 and the second-order light of the second light L2 which have a relatively high diffraction efficiency are used. Accordingly, the first-order light of the first light L1 and the second-order light of the second light L2 which have a relatively high diffraction efficiency can be detected in the light detection portion 26, and light in a wide wavelength range can be spectrally separated and detected with sufficient diffraction efficiency.

The spectrometer 4 is disposed between the spectroscopic portion 23 and the light detection portion 26, and includes the filter 25 that blocks the diffracted light of the first light L1 other than the first-order light and the diffracted light of the second light L2 other than the second-order light. Accordingly, the first-order light of the first light L1 and the second-order light of the second light L2 can be more reliably detected in the light detection portion 26.

The light incident portion 21 includes the first slit 33 from which the first light L1 is emitted, and the second slit 34 from which the second light L2 is emitted. Accordingly, the first light L1 and the second light L2 can be output from the light incident portion 21.

The light incident portion 21 includes the first filter 33a that is disposed in the first slit 33 and that blocks light outside the first wavelength range, and the second filter 34a that is disposed in the second slit 34 and that blocks light outside the second wavelength range. Accordingly, the first light L1 and the second light L2 can be more reliably output from the light incident portion 21.

The first light detection region 26a and the second light detection region 26b of the light detection portion 26 are arranged along the spectroscopic direction of the spectroscopic portion 23. Accordingly, the first-order light of the first light L1 and the second-order light of the second light L2 can be suitably detected in the light detection portion 26.

Each of the first light detection region 26a and the second light detection region 26b includes a plurality of pixels arranged along the spectroscopic direction and the direction perpendicular to (intersecting) the spectroscopic direction. Accordingly, for example, not only wavelength information that is information along the spectroscopic direction, but also position information that is information along the direction perpendicular to the spectroscopic direction can be acquired.

The light detection portion 26 is composed of a single sensor element. Accordingly, the configuration of the spectrometer 4 can be simplified.

The spectroscopic portion 23 includes a spectroscopic element capable of spectrally separating at least light in a wavelength range of 1100 nm to 1500 nm into the first-order diffracted light. As described above, when the spectroscopic portion 23 can diffract light in a wide wavelength range in this way, the diffraction efficiency is low, which is a risk; however, in the spectrometer 4, even in such a case, light in a wide wavelength range can be spectrally separated and detected with sufficient diffraction efficiency.

In the light incident portion 21, the width of the first slit 33 is equal to the width of the second slit 34. Accordingly, the configuration of the light incident portion 21 can be simplified.

The spectroscopic measurement system 1 includes the spectrometer 4; the conveying portion 2 that conveys the object B along the conveying direction A; the light irradiation portion 3 that irradiates the object B, which is conveyed by the conveying portion 2, with light; and the processing portion 5. The light emitted from the light irradiation portion 3 for irradiation and reflected or scattered by the object B is incident on the light incident portion 21, is spectrally separated by the spectroscopic portion 23, and is detected by the light detection portion 26, and the processing portion 5 generates a spectroscopic image based on the detection result of the light detection portion 26. According to the spectroscopic measurement system 1, for the reasons described above, light in a wide wavelength range can be spectrally separated and detected in the spectrometer 4 with sufficient diffraction efficiency, and as a result, a spectroscopic image of light from the object B can be satisfactorily generated.

In the spectroscopic measurement system 1, the light irradiation portion 3 irradiates the object B with the first irradiation light P1 (light including the first light L1) at the first position PS1 in the conveying direction A, and irradiates the object B with the second irradiation light P2 (light including the second light L2) at the second position PS2 spaced apart from the first position PS1 in the conveying direction A. With such a configuration as well, a spectroscopic image of light from the object B can be satisfactorily generated.

When the processing portion 5 generates a spectroscopic image based on the detection result of the light detection portion 26, the processing portion 5 generates the spectroscopic image by combining the detection result of the first light L1 and the detection result of the second light L2 by the light detection portion 26 based on the conveying speed of the object B by the conveying portion 2. Accordingly, a spectroscopic image can be generated in consideration of a deviation in detection timing between the first position PS1 and the second position PS2.

The light irradiation portion 3 includes the light source 11 and the light splitting element 12 that splits light from the light source 11 into the first irradiation light P1 and the second irradiation light P2. Accordingly, the object B can be irradiated with the first irradiation light P1 and the second irradiation light P2, and the reflected lights of these lights can be incident on the light incident portion 21 of the spectrometer 4.

### [Modification examples]

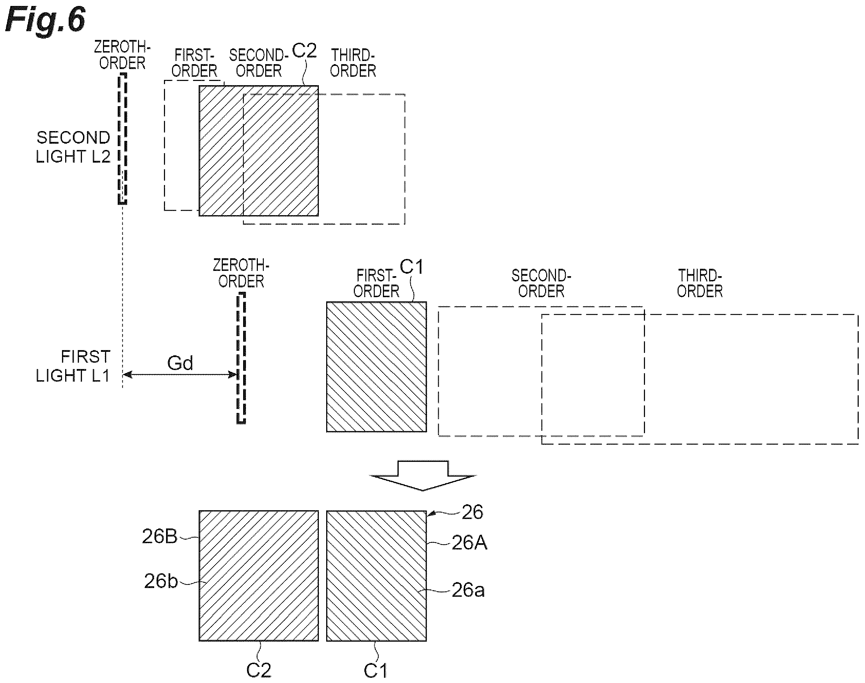

In a first modification example shown in FIG. 6, the light detection portion 26 is composed of two sensor elements 26A and 26B. For example, the sensor element 26A is an InGaAs image sensor, and the sensor element 26B is a charge coupled device (CCD) image sensor. The sensor element 26A includes the first light detection region 26a that detects the first-order light of the first light L1, and the sensor element 26B includes the second light detection region 26b that detects the second-order light of the second light L2. With the second modification example as well, similarly to the above-described embodiment, light in a wide wavelength range can be spectrally separated and detected with sufficient diffraction efficiency.

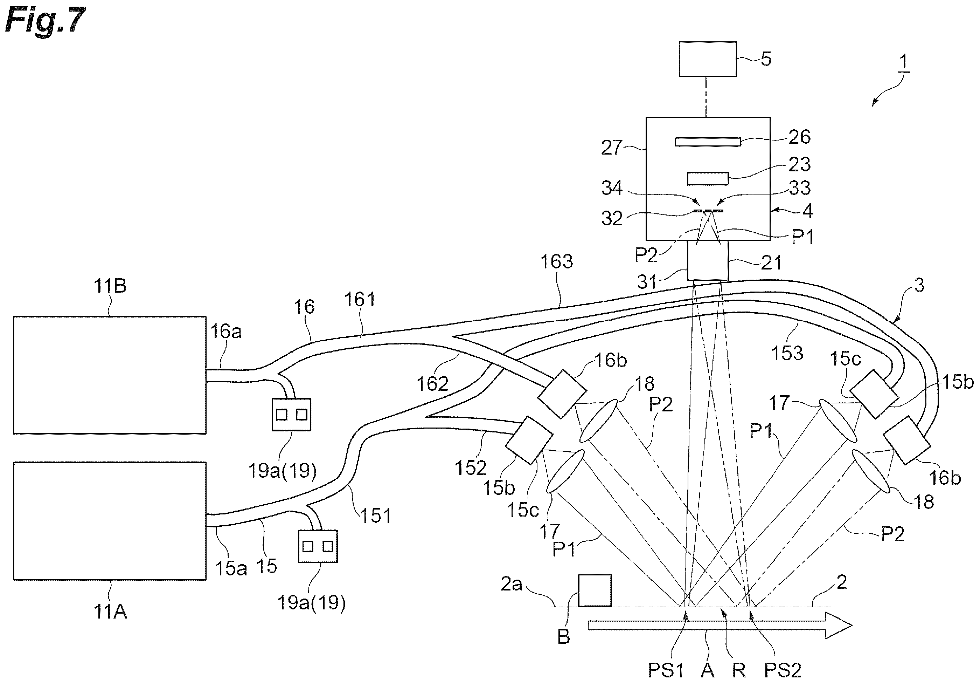

In a second modification example shown in FIG. 7, the light irradiation portion 3 includes two light sources 11A and 11B instead of the light source 11, and does not include the light splitting element 12 and the lenses 13 and 14. In the second modification example, the light source 11A outputs the first irradiation light P1 in a wavelength range of 900 nm to 1600 nm, and the light source 11B outputs the second irradiation light P2 in a wavelength range of 500 nm to 900 nm. For example, the light source 11A is a halogen lamp light source, and the light source 11B is an LED light source. The first irradiation light P1 output from the light source 11Ais guided by the first guide member 15 and irradiates the object B, and the second irradiation light P2 output from the light source 11B is guided by the second guide member 16 and irradiates the object B. In addition, the light irradiation portion 3 includes an adjustment portion 19. The adjustment portion 19 includes a pair of portions 19a provided in the first guide member 15 and the second guide member 16, and detects and adjusts (corrects) the intensity ratio between the first irradiation light P1 output from the light source 11A and the second irradiation light P2 output from the light source 11B.

With the second modification example as well, similarly to the above-described embodiment, light in a wide wavelength range can be spectrally separated and detected with sufficient diffraction efficiency. In addition, the intensity ratio between the first irradiation light P1 and the second irradiation light P2 can be adjusted by the adjustment portion 19, and for example, dynamic range matching can be performed for each wavelength band. In addition, the temperature characteristics of the light sources 11A and 11B can also be corrected based on the intensity ratio between the first irradiation light P1 and the second irradiation light P2.

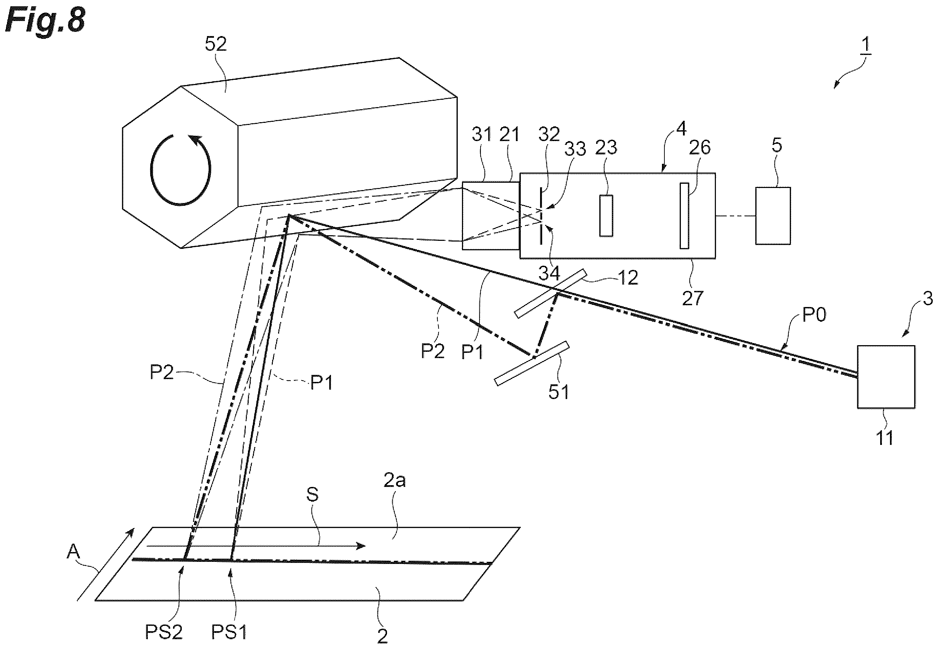

In a third modification example shown in FIGS. 8 and 9, the light irradiation portion 3 includes the light source 11, the light splitting element 12, a mirror 51, and a scanning portion 52. In the third modification example, the first irradiation light P1 that has transmitted through the light splitting element 12 is incident on the scanning portion 52. In addition, the second irradiation light P2 reflected by the mirror 51 after being reflected by the light splitting element 12 is incident on the scanning portion 52 at the same incident position as the first irradiation light P1 but at an incident angle different from that of the first irradiation light P1.

The first irradiation light P1 and the second irradiation light P2 incident on the scanning portion 52 are reflected by the scanning portion 52, and irradiate the object B that is conveyed by the conveying portion 2. The scanning portion 52 is, for example, a polygon mirror having a polygonal column shape in which a mirror surface is formed on an outer surface. The scanning portion 52 rotates around an axis thereof to scan the irradiation positions of the first irradiation light P1 and the second irradiation light P2 on the object B along a scanning direction S perpendicular to the conveying direction A. In this example, the first position PS1 that is the irradiation position of the first irradiation light P1 is spaced apart from the second position PS2, which is the irradiation position of the second irradiation light P2, in the direction perpendicular to the conveying direction A (scanning direction S). The first position PS1 and the second position PS2 move along the scanning direction S due to the rotation of the scanning portion 52. The first position PS1 and the second position PS2 are located at the same position in the conveying direction A. Namely, in this example, the light irradiation portion 3 irradiates the object B with the first irradiation light P1 at the first position PS1 in the conveying direction A, and irradiates the object B with the second irradiation light P2 at the second position PS2 spaced apart from the first position PS1 in the direction perpendicular to the conveying direction A.

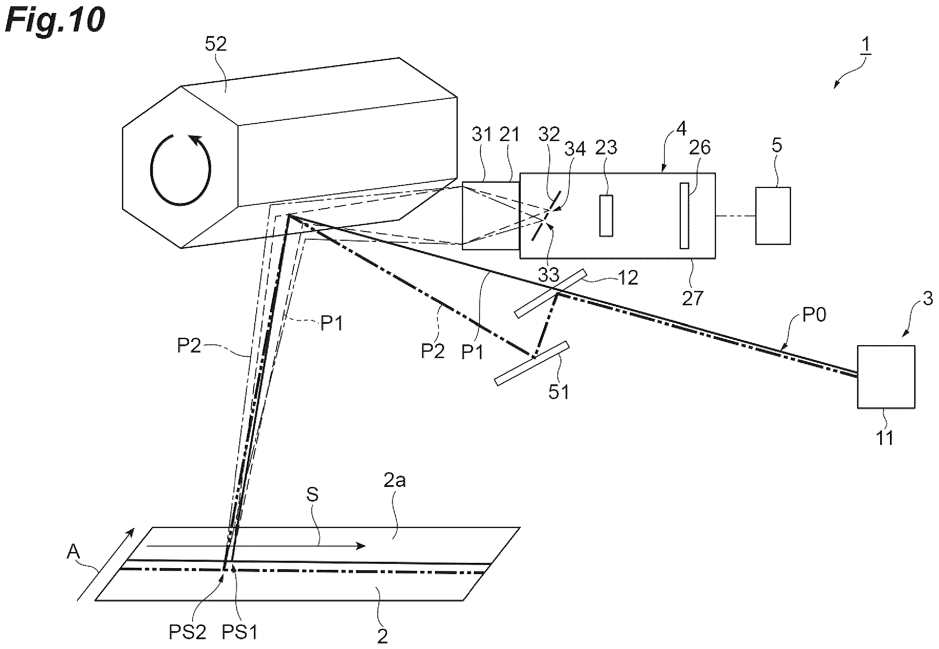

The first irradiation light P1 and the second irradiation light P2 reflected or scattered by the object B are reflected again by the scanning portion 52, and are incident on the spectrometer 4. In FIG. 8, the first irradiation light P1 and the second irradiation light P2 reflected or scattered by the object B are indicated by dashed lines and one-dot chain lines, respectively. This point also applies to FIG. 10. The spectrometer 4 is disposed such that the first irradiation light P1 is incident on the first slit 33 and the second irradiation light P2 is incident on the second slit 34. In this example, the spectrometer 4 is disposed such that the arrangement direction of the slits 33 and 34 is aligned with the up-down direction in FIG. 8. The spectroscopy and detection of the first irradiation light P1 and the second irradiation light P2 (the first light L1 and the second light L2) in the spectrometer 4 are the same as those of the above-described embodiment except for the following points.

In the third modification example, unlike the above-described embodiment, the first irradiation light P1 and the second irradiation light P2 with which the object B is irradiated do not spread in the direction perpendicular to the conveying direction A. Therefore, unlike the above-described embodiment, as shown in FIG. 9, the position of the first light L1 and the second light L2, which are output from the slits 33 and 34, in the extending direction of the slits 33 and 34 does not represent position information on the object B along the direction perpendicular to the conveying direction A (refer to the slit member 32 as viewed from the front, which is shown below the slit member 32 as viewed from the side). In addition, as shown in FIG. 9, the position of the first-order light of the first light L1 and the second-order light of the second light L2, which are detected by the light detection regions 26a and 26b, in the direction perpendicular to the arrangement direction (spectroscopic direction) of the light detection regions 26a and 26b does not represent position information on the object B along the direction perpendicular to the conveying direction A (refer to the light detection portion 26 as viewed from the front, which is shown below the light detection portion 26 as viewed from the side).

Therefore, in this example, the processing portion 5 integrates (binning) the detection results in the direction perpendicular to the arrangement direction of the light detection regions 26a and 26b, and generates a spectroscopic image. In the third modification example as well, since the scanning portion 52 scans the irradiation positions of the first irradiation light P1 and the second irradiation light P2 on the object B along the scanning direction S perpendicular to the conveying direction A, similarly to the above-described embodiment, the entirety of the object B can be observed (a spectroscopic image of the entirety of the object B can be generated).

With the third modification example as well, similarly to the above-described embodiment, light in a wide wavelength range can be spectrally separated and detected with sufficient diffraction efficiency. In addition, the light irradiation portion 3 irradiates the object B with the first irradiation light P1 at the first position PS1 in the conveying direction A, and irradiates the object B with the second irradiation light P2 at the second position PS2 spaced apart from the first position PS1 in the direction perpendicular to the conveying direction A. The light irradiation portion 3 includes the scanning portion 52 that scans the irradiation positions of the first irradiation light P1 and the second irradiation light P2 on the object B along the scanning direction S perpendicular to the conveying direction A. With such a configuration as well, a spectroscopic image of light from the object B can be satisfactorily generated.

A fourth modification example shown in FIG. 10 differs from the third modification example in the following points. In the fourth modification example, the first position PS1 that is the irradiation position of the first irradiation light P1 is spaced apart from the second position PS2, which is the irradiation position of the second irradiation light P2, in the conveying direction A. The first position PS1 and the second position PS2 are located at the same position in the direction perpendicular to the conveying direction A (scanning direction S). Namely, in this example, the light irradiation portion 3 irradiates the object B with the first irradiation light P1 at the first position PS1 in the conveying direction A, and irradiates the object B with the second irradiation light P2 at the second position PS2 spaced apart from the first position PS1 in the conveying direction A. The spectrometer 4 is disposed such that the first irradiation light P1 is incident on the first slit 33 and the second irradiation light P2 is incident on the second slit 34. In this example, the spectrometer 4 is disposed such that the arrangement direction of the slits 33 and 34 is parallel to the conveying direction A (such that the arrangement direction is perpendicular to the drawing sheet of FIG. 8). With the third modification example as well, similarly to the above-described embodiment, light in a wide wavelength range can be spectrally separated and detected with sufficient diffraction efficiency.

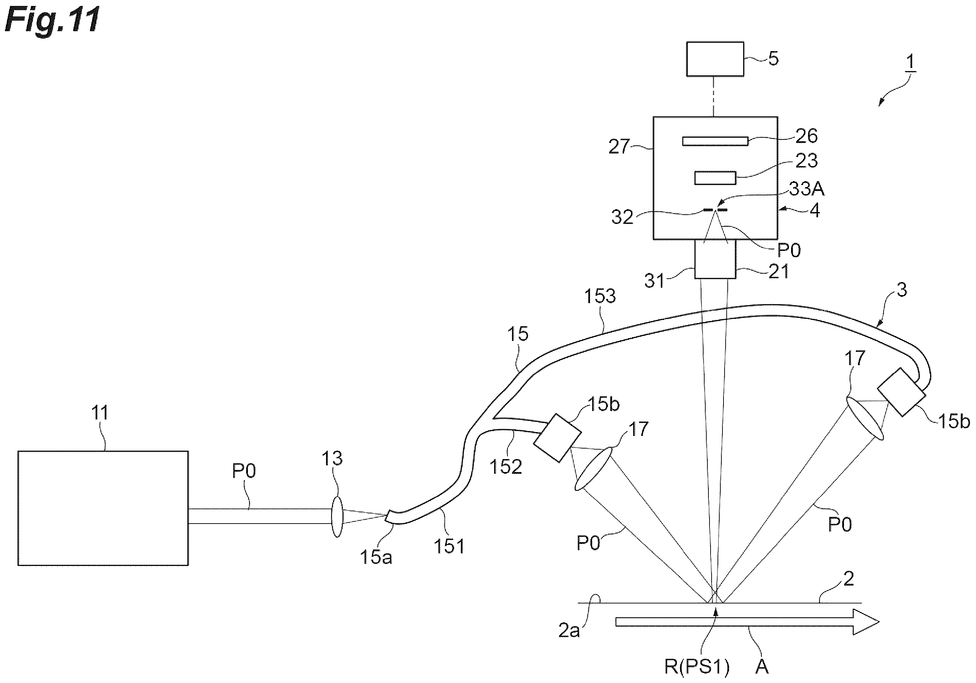

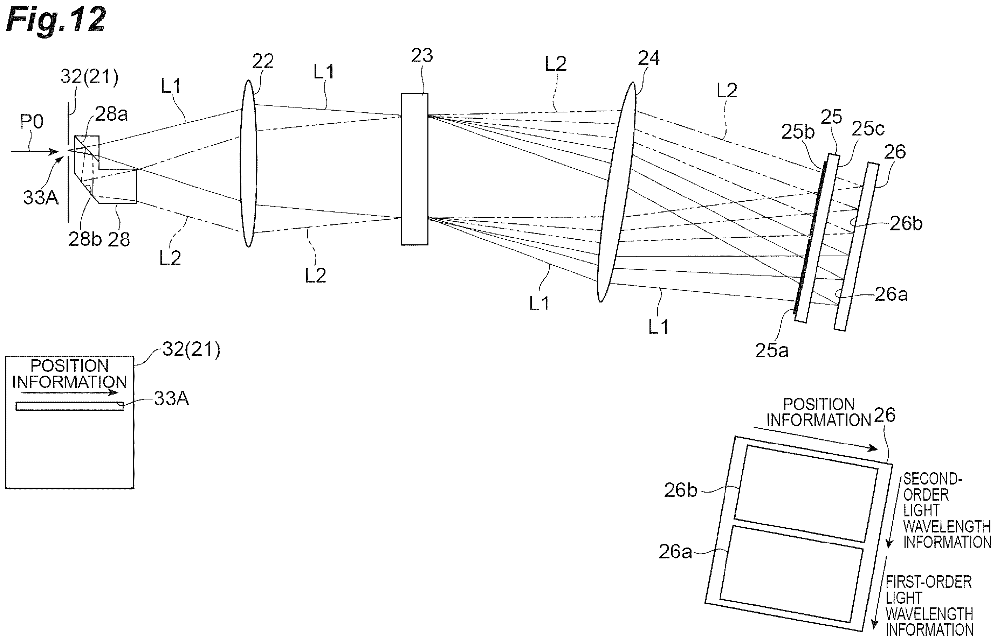

In a fifth modification example shown in FIGS. 11 and 12, the light irradiation portion 3 includes only the light source 11, the lens 13, the first guide member 15, and the pair of lenses 17, and does not include the light splitting element 12, the lens 14, the second guide member 16, and the pair of lenses 18. In this example, the irradiation light P0 from the light source 11 is guided by the first guide member 15 and irradiates the object B, and the irradiation light P0 is reflected or scattered by the object B, and is incident on the light incident portion 21 of the spectrometer 4.

As shown in FIG. 12, in the spectrometer 4 of the fifth modification example, the light incident portion 21 includes a light splitting element 28. Unlike the above-described embodiment, only one slit 33A is formed in the slit member 32. The irradiation light P0 is incident on the slit 33A, and the irradiation light P0 that has passed through the slit 33A is incident on the light splitting element 28. The light splitting element 28 splits the irradiation light P0 (incident light) into the first light L1 and the second light L2. In this example, the light splitting element 28 is a glass prism having a dichroic surface 28a and a reflecting surface 28b. The dichroic surface 28a transmits the first light L1 in the first wavelength range while reflecting the second light L2 in the second wavelength range. The first light L1 that has transmitted through the dichroic surface 28a is incident on the lens 22. The second light L2 reflected by the dichroic surface 28a is reflected by the reflecting surface 28b, and is incident on the lens 22. In this example, the first wavelength range of the first light L1 is 900 nm to 1700 nm, and the second wavelength range of the second light L2 is 450 nm to 850 nm. With the fifth modification example as well, similarly to the above-described embodiment, light in a wide wavelength range can be spectrally separated and detected with sufficient diffraction efficiency.

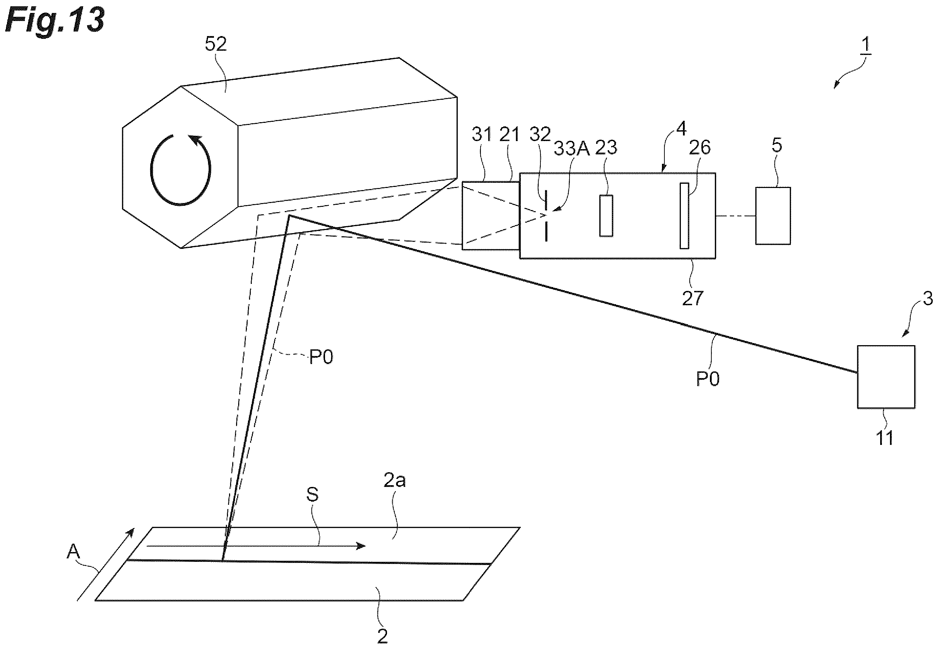

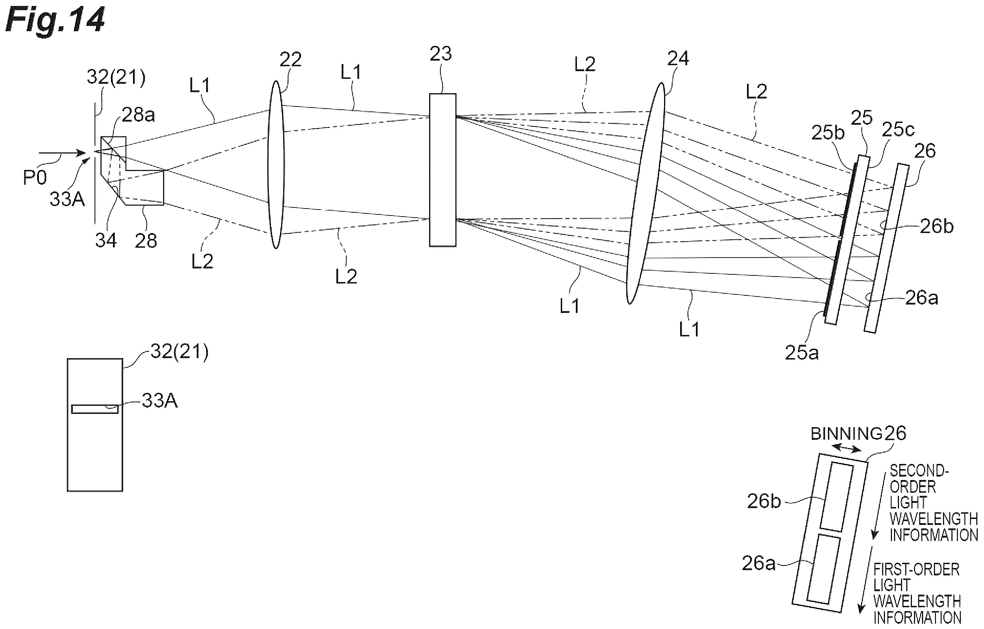

In a sixth modification example shown in FIGS. 13 and 14, the light irradiation portion 3 includes the light source 11 and the scanning portion 52. The scanning portion 52 is the same as that in the third modification example. In this example, the irradiation light P0 from the light irradiation portion 3 is reflected by the scanning portion 52, and irradiates the object B. Then, the irradiation light P0 reflected or scattered by the object B is reflected again by the scanning portion 52, and is incident on the spectrometer 4. The spectrometer 4 is the same as that in the fifth modification example. In the sixth modification example as well, similarly to the third modification example, the position of the first-order light of the first light L1 and the second-order light of the second light L2, which are detected by the light detection regions 26a and 26b, in the direction perpendicular to the arrangement direction (spectroscopic direction) of the light detection regions 26a and 26b does not represent position information on the object B along the direction perpendicular to the conveying direction A. Therefore, the processing portion 5 integrates (binning) the detection results in the direction perpendicular to the arrangement direction of the light detection regions 26a and 26b, and generates a spectroscopic image. With the sixth modification example as well, similarly to the above-described embodiment, light in a wide wavelength range can be spectrally separated and detected with sufficient diffraction efficiency.

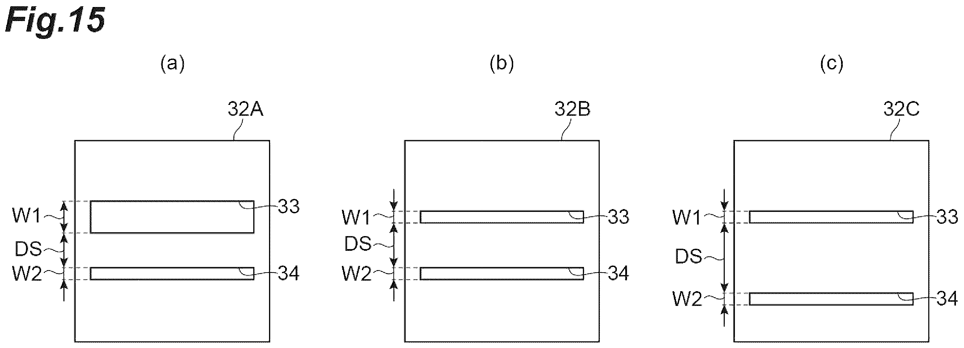

The slit member 32 may be configured as shown in (a) to (c) in FIG. 15. In a slit member 32A of (a) in FIG. 15, a width W1 of the first slit 33 is different from a width W2 of the second slit 34. In this example, the width W1 of the first slit 33 is wider than the width W2 of the second slit 34. In this case, the difference in wavelength resolution or detection sensitivity between the first-order light of the first light L1 and the second-order light of the second light L2 can be adjusted by the widths W1 and W2 of the slits 33 and 34. For example, when the first-order light of the first light L1 and the second-order light of the second light L2 are used, the wavelength resolution or the detection sensitivity on the second light L2 side are improved, whereas the wavelength resolution or the detection sensitivity on the first light L1 side can decrease. In this regard, the detection intensity ratio can be changed, for example, by adjusting the widths W1 and W2 of the slits 33 and 34, and dynamic range matching can be performed.

A slit member 32B in (b) of FIG. 15 corresponds to that in the above-described embodiment. Namely, in the slit member 32B, the width W1 of the first slit 33 is equal to the width W2 of the second slit 34. When the slit members 32A and 32B are compared, the width W1 of the first slit 33 of the slit member 32B is wider than the width W1 of the first slit 33 of the slit member 32A. In a slit member 32C of (c) in FIG. 15, a distance DS between the first slit 33 and the second slit 34 is different from the distance DS in the slit member 32B. In this example, the distance DS in the slit member 32C is longer than the distance DS in the slit member 32B.

As another modification example, one slit member selected from the slit members 32A to 32C may be attached to an attachment portion (not shown) of the light incident portion 21. Namely, the slit members 32A to 32C may be replaceable (interchangeable). As described above, the slit members 32A to 32C differ in at least one of the width W1 of the first slit 33 and the distance DS between the first slit 33 and the second slit 34. Incidentally, the slit members 32A to 32C may differ in the width W2 of the second slit 34 in addition to or instead of the at least one. Namely, the slit members 32A to 32C may differ in at least one of the width W1 of the first slit 33, the width W2 of the second slit 34, and the distance DS between the first slit 33 and the second slit 34.

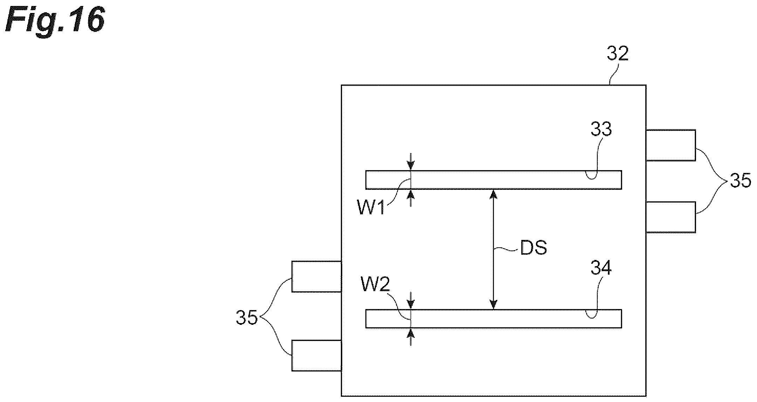

The slit member 32 may be configured as shown in FIG. 16. In the example of FIG. 16, the width W1 of the first slit 33, the width W2 of the second slit 34, and the distance DS between the first slit 33 and the second slit 34 are variable by screws 35. Incidentally, at least one of the width W1 of the first slit 33, the width W2 of the second slit 34, and the distance DS between the first slit 33 and the second slit 34 may be variable, and for example, only one may be variable.

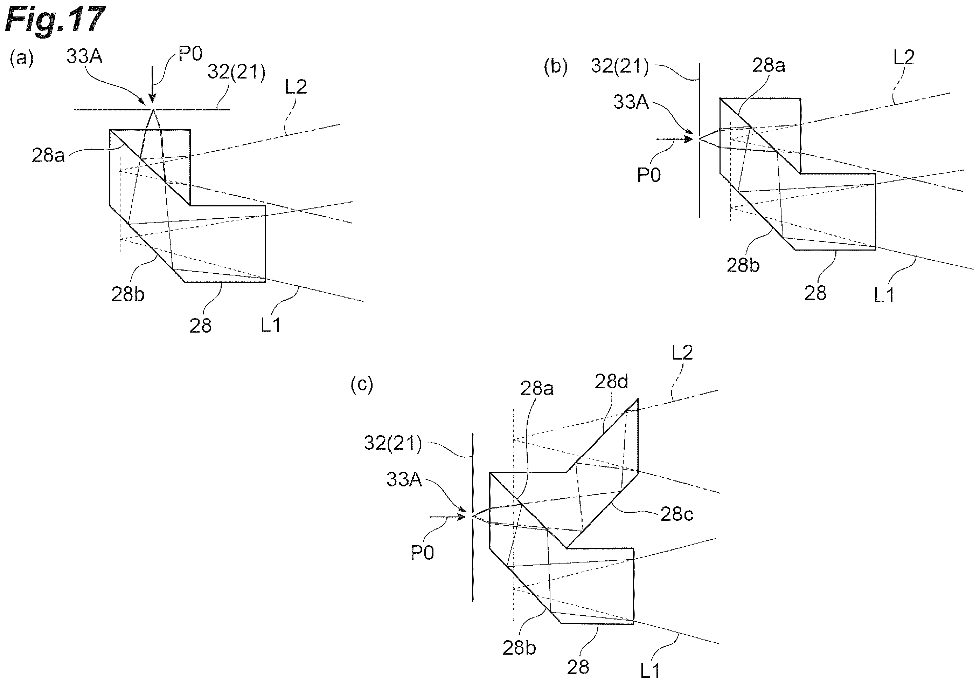

The light splitting element 28 of the fifth modification example or the sixth modification example may be configured as shown in (a) to (c) in FIG. 17. In the light splitting element 28 of (a) in FIG. 17, the dichroic surface 28a reflects the second light L2 in the second wavelength range while transmitting the first light L1 in the first wavelength range. The first light L1 that has transmitted through the dichroic surface 28a is reflected by the reflecting surface 28b, and is incident on the lens 22. The second light L2 reflected by the dichroic surface 28a is incident on the lens 22. In the light splitting element 28 of (b) in FIG. 17, the dichroic surface 28a transmits the second light L2 in the second wavelength range while reflecting the first light L1 in the first wavelength range. The first light L1 reflected by the dichroic surface 28a is reflected by the reflecting surface 28b, and is incident on the lens 22. The second light L2 that has transmitted through the dichroic surface 28a is incident on the lens 22.

The light splitting element 28 in (c) of FIG. 17 includes the dichroic surface 28a and three reflecting surfaces 28b, 28c, and 28d. The dichroic surface 28a transmits the second light L2 in the second wavelength range while reflecting the first light L1 in the first wavelength range. The first light L1 reflected by the dichroic surface 28a is reflected by the reflecting surface 28b, and is incident on the lens 22. The second light L2 that has transmitted through the dichroic surface 28a is sequentially reflected by the reflecting surface 28b and 28c, and is incident on the lens 22. In this way, the light splitting element 28 may include the dichroic surface 28a that reflects the other of the first light L1 and the second light L2 while transmitting one of the first light L1 and the second light L2, and at least one reflecting surface (28b, 28c, 28d) that reflects the first light L1 or the second light L2 that has transmitted through the dichroic surface 28a or is reflected by the dichroic surface 28a. Incidentally, in the examples of (a) and (b) in FIG. 17, since the lengths of paths traveling through the glass (prism) are different between the first light L1 and the second light L2, the amount of spherical aberration is different, and there is a possibility that aberration correction cannot be accurately performed by the optical system, whereas in the example of (c) in FIG. 17, since there is no such difference in the paths (the lengths of the paths are the same), the amount of spherical aberration is also the same, and aberration correction can be accurately performed by the optical system.

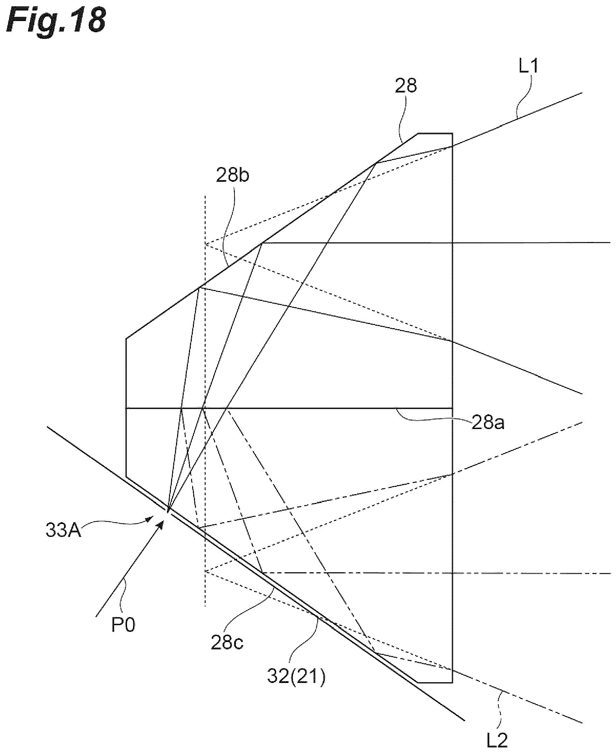

The light splitting element 28 of the fifth modification example or the sixth modification example may be configured as shown in FIG. 18. In the light splitting element 28 of FIG. 18, the dichroic surface 28a transmits the second light L2 in the second wavelength range while reflecting the first light L1 in the first wavelength range. The first light L1 that has transmitted through the dichroic surface 28a is reflected by the reflecting surface 28b, and is incident on the lens 22. The second light L2 reflected by the dichroic surface 28a is reflected by the reflecting surface 28b, and is incident on the lens 22.

The present disclosure is not limited to the embodiment and the modification examples described above. For example, the material and shape of each configuration are not limited to the material and shape described above, and various materials and shapes can be adopted.

In the above-described embodiment, the first-order light of the first light L1 and the second-order light of the second light L2 are detected; however, an Nth-order light of the first light L1 may be detected by the first light detection region 26a, and an Mth-order light of the second light L2 may be detected by the second light detection region 26b. Here, N and M are integers other than 0 where the absolute value of N is smaller than the absolute value of M. For example, the second-order light of the first light L1 may be detected by the first light detection region 26a, and the third-order light of the second light L2 may be detected by the second light detection region 26b. Namely, N and M are not limited to 1 and 2, and may be 2 and 3, respectively. Alternatively, N and M may be -1 and -2, respectively. Namely, the -first-order light of the first light L1 may be detected by the first light detection region 26a, and the -second-order light of the second light L2 may be detected by the second light detection region 26b.

In the spectrometer 4, the filter 25 may be omitted. In the light incident portion 21, the first filter 33a and the second filter 34a may be omitted. However, when the first filter 33a and the second filter 34a are disposed, the first filter 33a can reliably block light outside the first wavelength range, and the second filter 34a can reliably block light in the second wavelength range, so that the first light L1 and the second light L2 can be more reliably output from the light incident portion 21.

In the above-described embodiment, each of the first light detection region 26a and the second light detection region 26b includes a plurality of pixels arranged along the spectroscopic direction and the direction perpendicular to the spectroscopic direction; however, each of the first light detection region 26a and the second light detection region 26b may include a plurality of pixels arranged only along the spectroscopic direction. Namely, the light detection portion 26 may be a line sensor in which a plurality of pixels are disposed side by side in a one-dimensional manner. Such a configuration may be used, for example, in the case of the third modification example shown in FIGS. 8 and 9 and in the case of the sixth modification example shown in FIGS. 13 and 14. In this case, when the processing portion 5 generates a spectroscopic image, the processing portion 5 does not perform a process of integrating (binning) the detection results in the direction perpendicular to the arrangement direction of the light detection regions 26a and 26b.

The wavelength range of the first irradiation light P1 and the second irradiation light P2, the first wavelength range of the first light L1, and the second wavelength range of the second light L2 are not limited to the above-described examples. In the above-described embodiment, the wavelength range of the first irradiation light P1 does not overlap the wavelength range of the second irradiation light P2; however, a part of the wavelength range of the first irradiation light P1 may overlap the wavelength range of the second irradiation light P2. In the above-described embodiment, the first wavelength range of the first light L1 overlaps the second wavelength range of the second light L2; however, the first wavelength range may not overlap the second wavelength range.

In the above-described embodiment, the light irradiation portion 3 irradiates the object B with the first irradiation light P1 and the second irradiation light P2 from both sides in the conveying direction A; however, the light irradiation portion 3 may irradiate the object B with the first irradiation light P1 and the second irradiation light P2 from only one side in the conveying direction A. In the above-described embodiment, the processing portion 5 is provided separately from the spectrometer 4; however, the processing portion 5 may constitute a part of the spectrometer 4. In addition, in the above-described embodiment, the processing portion 5 generates a spectroscopic image by combining the detection result of the first light L1 and the detection result of the second light L2 by the light detection portion 26 based on the conveying speed of the object B by the conveying portion 2; however, the spectrometer 4 may output data, which is obtained by combining the detection result of the first light L1 and the detection result of the second light L2 by the light detection portion 26 based on the conveying speed of the object B by the conveying portion 2, to the processing portion 5, and the processing portion 5 may generate a spectroscopic image based on the data.

### Reference Signs List

1: spectroscopic measurement system, 2: conveying portion, 3: light irradiation portion, 4: spectrometer, 5: processing portion, 11: light source, 12: light splitting element, 21: light incident portion, 23: spectroscopic portion, 25: filter, 26: light detection portion, 26a: first light detection region, 26b: second light detection region, 28: light splitting element, 28a: dichroic surface, 28b, 28c, 28d: reflecting surface, 33: first slit, 34: second slit, 33a: first filter, 34a: second filter, 52: scanning portion, A: conveying direction, B: object, L1: first light, L2: second light, PS1: first position, PS2: second position.

## Claims

1. A spectrometer comprising:
a light incident portion;
a spectroscopic portion that spectrally separates light from the light incident portion; and
a light detection portion that detects the light spectrally separated by the spectroscopic portion,
wherein the light incident portion outputs a first light in a first wavelength range and a second light in a second wavelength range, and the first wavelength range includes a longer wavelength than the second wavelength range,
the spectroscopic portion spectrally separates the first light and the second light, and
an Nth-order light of the first light is incident on a first light detection region of the light detection portion and is detected by the light detection portion, and an Mth-order light of the second light is incident on a second light detection region of the light detection portion and is detected by the light detection portion, where N and M are integers other than 0 where an absolute value of N is smaller than an absolute value of M.

2. The spectrometer according to claim 1, further comprising:
a filter that is disposed between the spectroscopic portion and the light detection portion, and that blocks a diffracted light of the first light other than the Nth-order light and a diffracted light of the second light other than the Mth-order light.

3. The spectrometer according to claim 1 or 2,
wherein the light incident portion includes a first slit from which the first light is emitted, and a second slit from which the second light is emitted.

4. The spectrometer according to claim 3,
wherein the light incident portion further includes at least one of a first filter that is disposed in the first slit and that blocks light outside the first wavelength range and a second filter that is disposed in the second slit and that blocks light outside the second wavelength range.

5. The spectrometer according to claim 1 or 2,
wherein the light incident portion includes a light splitting element that splits an incident light into the first light and the second light.

6. The spectrometer according to claim 5,
wherein the light splitting element includes a dichroic surface that transmits one of the first light and second light and that reflects the other of the first light and the second light, and at least one reflecting surface that reflects the first light or the second light that has transmitted through the dichroic surface or is reflected by the dichroic surface.

7. The spectrometer according to any one of claims 1 to 6,
wherein the first light detection region and the second light detection region are arranged along a spectroscopic direction of the spectroscopic portion.

8. The spectrometer according to claim 7,
wherein each of the first light detection region and the second light detection region includes a plurality of pixels arranged along the spectroscopic direction.

9. The spectrometer according to claim 7,
wherein each of the first light detection region and the second light detection region includes a plurality of pixels arranged along the spectroscopic direction and a direction intersecting the spectroscopic direction.

10. The spectrometer according to any one of claims 1 to 9,
wherein the light detection portion consists of a single sensor element.

11. The spectrometer according to any one of claims 1 to 10,
wherein the absolute value of N is 1 and the absolute value of M is 2.

12. The spectrometer according to any one of claims 1 to 11,
wherein the spectroscopic portion includes a spectroscopic element capable of spectrally separating at least light in a wavelength range of 1100 nm to 1500 nm into a first-order diffracted light.

13. The spectrometer according to claim 3 or 4,
wherein a width of the first slit is equal to a width of the second slit.

14. The spectrometer according to claim 3 or 4,
wherein a width of the first slit is different from a width of the second slit, or
at least one of the width of the first slit and the width of the second slit is variable.

15. The spectrometer according to claim 3 or 4,
wherein the light incident portion further includes an attachment portion to which one slit member selected from a plurality of slit members, in each of which the first slit and the second slit are formed, is attached, and
the plurality of slit members differ in at least one of a width of the first slit, a width of the second slit, and a distance between the first slit and the second slit.

16. A spectroscopic measurement system comprising:
the spectrometer according to any one of claims 1 to 15;
a conveying portion that conveys an object along a conveying direction;
a light irradiation portion that irradiates the object, which is conveyed by the conveying portion, with light; and
a processing portion,
wherein the light emitted from the light irradiation portion for irradiation and reflected or scattered by the object is incident on the light incident portion, is spectrally separated by the spectroscopic portion, and is detected by the light detection portion, and
the processing portion generates a spectroscopic image based on a detection result of the light detection portion.

17. A spectroscopic measurement system comprising:
the spectrometer according to claim 3 or 4;
a conveying portion that conveys an object along a conveying direction;
a light irradiation portion that irradiates the object, which is conveyed by the conveying portion, with light; and
a processing portion,
wherein the light emitted from the light irradiation portion for irradiation and reflected or scattered by the object is incident on the light incident portion, is spectrally separated by the spectroscopic portion, and is detected by the light detection portion, and
the processing portion generates a spectroscopic image based on a detection result of the light detection portion.

18. The spectroscopic measurement system according to claim 17,
wherein the light irradiation portion irradiates the object with light including the first light at a first position in the conveying direction, and irradiates the object with light including the second light at a second position spaced apart from the first position in the conveying direction.

19. The spectroscopic measurement system according to claim 18,
wherein when the processing portion generates a spectroscopic image based on the detection result of the light detection portion, the processing portion generates the spectroscopic image by combining a detection result of the first light and a detection result of the second light by the light detection portion based on a conveying speed of the object by the conveying portion.

20. The spectroscopic measurement system according to claim 17,
wherein the light irradiation portion irradiates the object with light including the first light at a first position in the conveying direction, and irradiates the object with light including the second light at a second position spaced apart from the first position in a direction intersecting the conveying direction.

21. The spectroscopic measurement system according to claim 17,
wherein the light irradiation portion includes a scanning portion that scans an irradiation position of the light on the object along a direction intersecting the conveying direction.

22. The spectroscopic measurement system according to any one of claims 17 to 21,
wherein the light irradiation portion includes a light source and a light splitting element, and the light splitting element splits light from the light source into light including the first light and light including the second light.

23. A spectroscopic detection method using the spectrometer according to any one of claims 1 to 15, the method comprising, in the following order:
a step of causing the light incident portion to output the first light and the second light;
a step of causing the spectroscopic portion to spectrally separate the first light and the second light; and
a step of causing the Nth-order light of the first light to be incident on the first light detection region and causing the light detection portion to detect the Nth-order light, and causing the Mth-order light of the second light to be incident on the second light detection region and causing the light detection portion to detect the Mth-order light.
